# EUROPEAN PATENT APPLICATION

(11) **EP 2 456 246 A1**
(43) Date of publication of application: **23.05.2012**
(21) Application number: 10818378.1
(22) Date of filing: 07.09.2010
(51) Int. Cl.: H04W 12/08, H04L 29/08, H04L 29/06

(54) **NETWORK SELECTION METHOD BASED ON MULTI-LINK AND APPARATUS THEREOF**

(30) Priority: 28.09.2009 CN 200910110714
(71) Applicant: Huawei Technologies Co., Ltd., Shenzhen, Guangdong 518129 (CN)
(72) Inventor: HU, Xiang, Shenzhen Guangdong 518129 (CN); XIA, Yuan, Shenzhen Guangdong 518129 (CN); QU, Qin, Shenzhen Guangdong 518129 (CN); LUO, Wujun, Shenzhen Guangdong 518129 (CN); ZHOU, Zijun, Shenzhen Guangdong 518129 (CN); SU, Yan, Shenzhen Guangdong 518129 (CN); LIU, Sheng, Shenzhen Guangdong 518129 (CN)
(74) Representative: Pfenning, Meinig & Partner GbR
(86) International application number: PCT/CN2010/076656
(87) International publication number: WO 2011/035684

(57) **Abstract**

A verification method, apparatus, and system for resource access control are provided. The method includes: obtaining a Uniform Resource Locator (URL) link sent by a user terminal, where the URL link is generated by a portal server according to obtained user terminal information; and obtaining the user terminal information included in the URL link and performing a validity check according to user terminal information stored on a network side and the user terminal information included in the URL link. A portal server generates a URL link according to the user terminal information entered by the user and the validity check is performed on the URL link according to the user terminal information stored on the network side so that the validity check can be performed on the URL link according to the user terminal information, which prevents different users from accessing a resource through the same correct URL link and avoids occurrence of link theft.

## Description

This application claims priority to Chinese Patent Application No. 200910110714.7, filed with the Chinese Patent Office on Sep. 28, 2009 and entitled "VERIFICATION METHOD, APPARATUS, AND SYSTEM FOR RESOURCE ACCESS CONTROL", which is incorporated herein by reference in its entirety.

### FIELD OF THE INVENTION

The present invention relates to the field of communications technologies, and in particular, to a verification method, apparatus, and system for resource access control.

### BACKGROUND OF THE INVENTION

With the application of the 3rd Generation mobile communications technologies, the vigorous growth of packet data services, and the popularity of the mobile Internet, people's life and entertainment activities are richer and richer. SPs (Service Provider, service providers) of the Internet own large quantities of valuable resources. For end users, such resources are URL (Uniform Resource Locator, uniform resource locator) links. However, because of the easy spreading of Internet resources and the wide existence of link theft, it is hard for the SPs to continue the operation mode of charging based on content clicking. It becomes an urgent issue how to control the resources effectively and provide reliable access control policies to avoid the impact of link theft on the SPs.

In the prior art, in a solution for verifying a URL link to realize effective resource control, the SP itself performs functions including generating and verifying URL links. A user accesses a portal server of an SP to query information such as resource links and charging policies. When the user selects a desired resource, the user clicks a paid link on the portal server to obtain the true URL link information of the resource. Then the user accesses a service server directly through the URL link to obtain the resource. The SP may perform certain encryption when the portal server provides the true URL link and verify the accessed URL link on the service server to ensure the correctness of the URL.

In the prior art, both the portal server and the service server are servers on the Internet side. On the one hand, the portal server and the service server cannot obtain detailed information related to the user in the user access process, but can only obtain an IP address of the user, and therefore, cannot perform charging and access control on the user directly. However, the IP address for the user access is allocated by an operator and changes frequently. Controlling the access of multiple users through an IP address has its disadvantages because other users may still access the resource through the same correct URL link. On the other hand, in terms of architecture, the portal server that provides encrypted URL links and the service server that verifies the URL for resource control need to be deployed in pairs. In addition, for each new service, the URL verification function needs to be added on the newly-added service server, and the complex secret key correlation between all portal servers and service servers needs to be maintained.

### SUMMARY OF THE INVENTION

Embodiments of the present invention provide a verification method, apparatus, and system for resource access control so as to realize effective validity check of a user.

A verification method for resource access control includes:
obtaining a Uniform Resource Locator (URL) link sent by a user terminal, where the URL link is generated by a portal server according to obtained user terminal information; and
obtaining the user terminal information included in the URL link and performing a validity check according to user terminal information stored on a network side and the user terminal information included in the URL link.

A verification apparatus for resource access control includes:
a link obtaining unit, configured to obtain a Uniform Resource Locator (URL) link sent by a user terminal, where the URL link is generated by a portal server according to obtained user terminal information; and
a verification unit, configured to obtain the user terminal information included in the URL link and perform a validity check according to user terminal information stored on a network side and the user terminal information included in the URL link.

A verification system for resource access control includes:
a portal server, configured to generate a Uniform Resource Locator (URL) link according to obtained user terminal information and send the URL link to a verification apparatus; and
the verification apparatus, configured to obtain the user terminal information included in the URL link and perform a validity check according to user terminal information stored on a network side and the user terminal information included in the URL link.

In the verification method, apparatus, and system for resource access control according to the embodiments of the present invention, the URL link generated by the portal server and sent by the user terminal is obtained and the validity check is performed on the URL link according to the user terminal information stored on the network side so that the validity check can be performed on the URL link according to the user terminal information, which prevents different users from accessing the resource through the same correct URL link and avoids occurrence of link theft.

### BRIEF DESCRIPTION OF THE DRAWINGS

FIG. 1 is a schematic flowchart of a verification method for resource access control according to an embodiment of the present invention;
FIG. 2 is a schematic flowchart of another verification method for resource access control according to an embodiment of the present invention;
FIG. 3 is a schematic flowchart of still another verification method for resource access control according to an embodiment of the present invention;
FIG. 4 is a schematic diagram of a verification apparatus for resource access control according to an embodiment of the present invention;
FIG. 5 is a schematic diagram of another verification apparatus for resource access control according to an embodiment of the present invention; and
FIG. 6 is a schematic diagram of a verification system for resource access control according to an embodiment of the present invention.

### DETAILED DESCRIPTION OF THE EMBODIMENTS

Both a portal server and a service server are servers on the Internet side, and cannot obtain user terminal information, such as MSISDN (Mobile Station international Integrated Service Digital Network number, mobile station international integrated service digital network number) or IMSI (International Mobile Subscriber Identifier, international mobile subscriber identifier), in a user access process, but can only obtain an IP address of the user, and therefore, cannot perform charging and access control on the user directly. In the embodiments of the present invention, a network element that performs a validity check on a URL link is migrated from a service server provided by an SP to a gateway device of an operator. The gateway device can obtain detailed user information (MSISDN or IMSI) so that a URL verification function does not need to be performed by the service server on the Internet side. Therefore, when a new service is developed by the SP, it is unnecessary to add a new URL verification function on the service server, but only necessary to directly configure new filtering and verification rules between the portal server and the gateway device. The operator may also cooperate and share benefits with more SPs by providing reliable, stable, and well-operated network solutions for the SPs.

It should be noted that the gateway device in the embodiments of the present invention may specifically be a GGSN, a P-GW (PDN Gateway, packet data network gateway), or a PDSN (Packet Data Support Node, packet data support node). For example, in a GSM (Global System for Mobile communication, global system for mobile communication), GPRS (General Packet Radio Service, general packet radio service), WCDMA (Wireless Code Division Multiple Access, wireless code division multiple access), or TD-SCDMA (Time Division-Synchronous Code Division Multiple Access, time division-synchronous code division multiple access) system, the gateway device may specifically be a GGSN; in an E-UTRAN (Evolved Universal Terrestrial Radio Access Network, evolved universal terrestrial radio access network), LTE (Long Term Evolution, 3GPP long term evolution), or SAE (System Architecture Evolution, system architecture evolution) system, the gateway device may be a P-GW; and in a CDMA2000 system, the gateway device may be a PDSN. In the specific embodiments of the present invention, the gateway device is a GGSN for exemplary description, but those skilled in the art may understand that the gateway device is not limited to the GGSN.

The technical solutions of the embodiments of the present invention are further described through the accompanying drawings and specific embodiments.

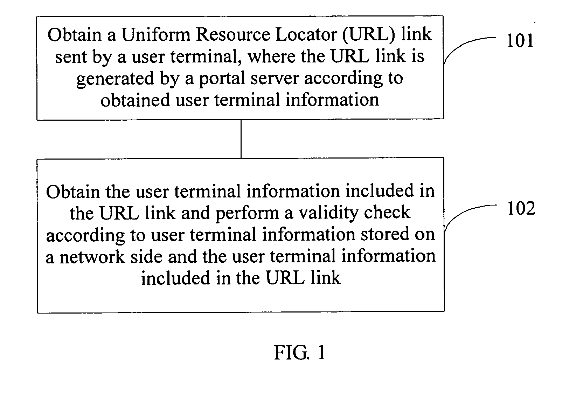

As shown in FIG. 1, an embodiment of the present invention provides a verification method for resource access control. The method includes the following steps.

Step 101: Obtain a Uniform Resource Locator (URL) link sent by a user terminal, where the URL link is generated by a portal server according to obtained user terminal information.

Step 102: Obtain the user terminal information included in the URL link and perform a validity check according to user terminal information stored on a network side and the user terminal information included in the URL link.

In the verification method for resource access control according to the embodiment of the present invention, the URL link generated by the portal server and sent by the user terminal is obtained and the validity check is performed on the URL link according to the user terminal information stored on the network side so that the validity check can be performed on the URL link according to the user terminal information, which prevents different users from accessing the resource through the same correct URL link and avoids occurrence of link theft.

It should be noted that the validity check may be performed by a gateway device on the network side or a service server of the SP, which is described in detail through specific embodiments and the accompanying drawings.

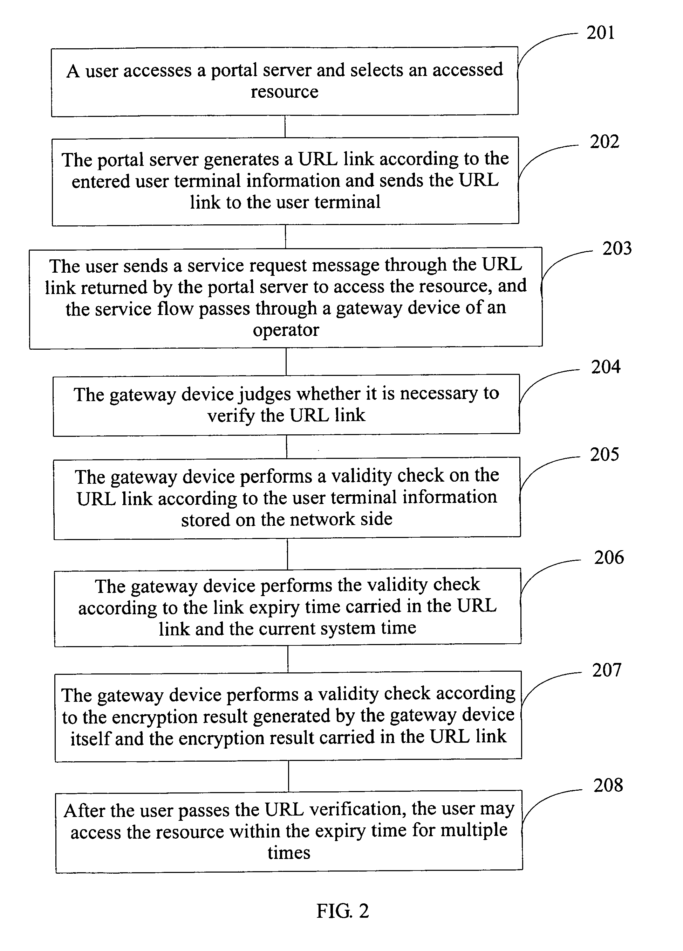

As shown in FIG. 2, an embodiment of the present invention provides a verification method for resource access control. The method includes the following steps.

Step 201: A user accesses a portal server and selects an accessed resource.

The user may browse an accessible resource list and charging information that are on the portal server to select a resource needed to be accessed. Then, the user clicks a link for payment and enters information (user number such as MSISDN) of the user terminal that needs to access the resource or account/password of the user to obtain a valid URL link to the accessible resource.

It should be noted that in specific application scenarios, after the user selects the accessed resource, the entering the user terminal information is optional. For example, the user account and user terminal information (MSISDN, IMSI or other information that can uniquely identify the user terminal) are bound in the registration information of the user with the SP, and the user terminal information can be determined according to the account.

Step 202: The portal server generates a URL link according to the obtained user terminal information and sends the URL link to the user terminal.

For example, in specific application scenarios, the portal server may apply the MD5 (Message-digest Algorithm 5, message-digest algorithm 5) to a string based on the user terminal information (MSISDN, IMSI or other information that can uniquely identify the user terminal), a URL of the accessed resource, a link expiry time, and a shared secret key in the format <URL>+<Expriy Time>+<MSISDN>+<Secret Key> (where the shared secret key is the same secret key configured on the GGSN and the portal server) to generate a hash value and finally constitute a URL link in the format <URL>+<Expriy Time>+<MSISDN>+<HASH value>, and then send the generated URL link to the user.

It should be noted that the MD5 calculation is one encryption method provided in the embodiment of the present invention, and the hash value is the encryption result obtained by applying the MD5 algorithm to the format <URL>+<Expriy Time>+<MSISDN>+<Secret Key>. The encryption method is not limited in the embodiment of the present invention.

An example of a valid URL format is as follows:
rtsp://10.10.10.10/Music/3gp/GL_CEW_V3GQ.3gp?090820180000+86139012345 67+2d95de254653ecd7ee653769a3c041cf
where rtsp://10.10.10.10/Music/3gp/GL_CEW_V3GQ.3gp? is the URL of the original accessed resource; 090820180000 is the expiry time, indicating that the URL is valid until 2009-08-20 18:00; 8613901234567 is a mobile phone number, indicating that the MSISDN that accesses the resource is 8613901234567; 2d95de254653ecd7ee653769a3c041cf is the hash value obtained by applying the MD5 algorithm to
   "rtsp://10.10.10.10/Music/3gp/GL_CEW_V3GQ.3gp?090820180000+8613901234567+ mobileone", where mobileone is the secret key. If the hash value is not consistent, it indicates that the URL link is altered.

It should be noted that an exemplary URL link generating method is described in this step but those skilled in the art may understand that the ULR link generating method in this step is not limited to such method. For example, after the user terminal pays for the access resource provided by the SP, the user terminal may not be restricted by the access time and may access the paid resource at any time. That is, the link expiry time used when the URL link is generated is optional. In this embodiment, the URL link is generated by applying the MD5 algorithm to a string, but those skilled in the art may understand that other substitute calculating methods may be used for generating the URL link without affecting the specific implementation of the embodiment of the present invention. The format of the URL link generated in this step is defined in accordance with the MD5 calculation, but the format of the URL link is not limited in the embodiment of the present invention.

Step 203: The user sends a service request message through the URL link returned by the portal server to access the resource, where the service request message carries the URL link, the service flow passes through a gateway device of an operator, and the gateway device obtains the URL link.

It should be noted that, the user terminal uses the URL link generated by the portal server to access the service server through the network of the operator. Because the user terminal receives the URL generated by the portal server and uses the URL to access the resource through the network of the operator, with a verification function added by the operator in the gateway device, when the service flow (such as the service request message) sent by the user terminal passes through the gateway device, the gateway device may perform a validity check on the URL link according to the user terminal information stored on the network side.

Step 204: The gateway device judges whether it is necessary to verify the URL link.

The gateway device may judge whether it is necessary to verify the URL link according to at least one of the following: an IP address of the service server corresponding to the URL link, a port number of the service server, and a domain name of the URL link. For example, a rule configured on the gateway device is verifying URLs to a specific service server. In this case, the gateway device may perform filtering according to the IP address of the service server in the data packet so as to verify URLs to the specific service server. Or, the verification rule of the gateway device is specific to the domain name. For example, URL links to 10.10.10.10 need to be verified. Or, the gateway device judges whether verification is necessary according to the port number accessed by the URL link.

It should be noted that this step is an optional step. In specific application scenarios, the system may be configured to verify all URL links to the service server of the SP by default.

Step 205: The gateway device obtains the user terminal information included in the URL link and performs a validity check on the URL link according to the user terminal information stored on the network side.

Specifically, the gateway device parses the URL link to obtain the user terminal information included in the URL link and performs the validity check according to the user terminal information stored on the network side and the user terminal information included in the URL link. That is, the gateway device judges whether the user terminal information stored on the network side is consistent with the user terminal information included in the URL link. If the user terminal information stored on the network side is not consistent with the user terminal information included in the URL link, the validity check fails and the service flow is blocked; if the user terminal information stored on the network side is consistent with the user terminal information included in the URL link, the procedure proceeds to subsequent verifications. It should be noted that, when the system is configured not to verify other information, after the validity check of the user terminal information succeeds, subsequent verifications are not performed and the gateway device may send the data flow to the service server which provides service to the user terminal.

It should be noted that the method for the gateway device to obtain the user terminal information stored on the network side is specifically as follows.

In a standard user activation process, the activation request message of the user terminal carrying the user terminal information (MSISDN, IMSI and other information) is sent to the gateway device to request activation. The operator allocates an IP address for the user terminal on the gateway device or another device. The gateway device may store a mapping relation between the user IP address and the user information and allocate a data plane identifier that is unique to the gateway device for the user terminal. When later the user terminal performs service access and the service flow passes through the gateway device, the message may carry the data plane identifier or the user IP address, and the gateway device may obtain the user terminal information stored on the network side according to the data plane identifier or the user IP address. Specifically, when an uplink message (data packets from the terminal to the server) passes through the gateway device, the message may carry the data plane identifier, and the gateway device may obtain the user terminal information according to the identifier; when a downlink message (data packets from the server to the terminal) passes through the gateway device, the gateway device may obtain the related user information according to the locally stored mapping relation of the user terminal IP address carried in the message.

It should be noted that, in specific application scenarios, before the performing the validity check on the URL link according to the user terminal information, the method further includes verifying the URL format.

The gateway device performs DPI (Deep Packet Inspection, deep packet inspection) parsing on the received service request message to obtain the URL link and parses the URL link that requires validity check according to the format defined in step 202 to obtain the user terminal information, expiry time, and encryption result that are carried in the URL link. After performing DPI parsing on the received message, the gateway device judges whether the format of the obtained URL link is the same as the defined format. If the format of the obtained URL link is the same as the defined format, the procedure proceeds to the subsequent validity check; if the format of the obtained URL link is different from the defined format, the validity check fails and the service flow is blocked. The defined format may be negotiated by the gateway device and the portal server in advance or a defined format set on the gateway device.

It should be further noted that the embodiment of the present invention does not limit the method for the gateway device to obtain the user terminal information. The user terminal information may be stored on the gateway device, or obtained by the gateway device through interaction with a device such as HLR.

Step 206: The gateway device performs the validity check according to the link expiry time carried in the URL link and the current system time. That is, the gateway device compares the link expiry time carried in the URL link with the current system time. If the current system time exceeds the link expiry time, the validity check fails and the service flow is blocked; if the current system time does not exceed the link expiry time, the procedure proceeds to subsequent verifications.

Step 207: The gateway device applies the MD5 algorithm according to a shared secret key in the format <URL>+<Expriy Time>+<MSISDN>+<Secret Key> by using the same method as that in step 202 to calculate a hash value and judges whether the hash value generated by the gateway device itself is consistent with the hash value carried in the URL link. If the hash value generated by the gateway device itself is consistent with the hash value carried in the URL link, the user is allowed to access the service server to get the resource; if the hash value generated by the gateway device itself is not consistent with the hash value carried in the URL link, the validity check fails and the service flow is blocked.

It should be noted that this step corresponds to step 202. The gateway device may encrypt the data using other encryption algorithms similar to the algorithm used in step 202 and perform the validity check according to the encryption result generated by the gateway device itself and the encryption result carried in the URL link. The format <URL>+<Expriy Time>+<MSISDN>+<Secret Key> and MD5 are just one example of the specific embodiments. The embodiment of the present invention does not limit the format and the encryption algorithm.

It should be noted that <Expriy Time> is an optional parameter. When the portal server calculates an encryption result and when the gateway device calculates an encryption result using the same algorithm, the parameter <Expriy Time> may not be included in the calculation format.

Step 208: After the user passes the URL verification, the user may access the resource within the link expiry time for multiple times.

It should be noted that the link expiry time verification in step 206 and the encryption verification in step 207 are both optional steps. Both steps, or either step, or neither step may be executed. Step 206 and step 207 may precede or follow step 305. The embodiment of the present invention does not limit the sequence of the verifications.

In the verification method for resource access control according to the embodiment of the present invention, a URL validity check function is added in the existing operator network for effective control on the access to resources on the service server of an SP. The method may provide a good network infrastructure for content providers to realize content charging. The solution is integrated into standard network elements and service procedures and therefore no new network element and no additional interface overhead are required. When the SP develops a new service, the SP only needs to sign a cooperation agreement with the operator to add valuable resource lists on the unified or independent portal servers. After reasonable charges are defined and the same secret key is configured on the GGSN and the portal server, the deployment of the new service is realized. The operator may also use the solution to attract more SPs so as to increase its benefits and maximize its profit. In the embodiment of the present invention, a gateway device on the communication network side verifies the URL link for a user requesting to access the service server of the SP according to the user terminal information. This method overcomes the defect in the prior art that a service server on the Internet side cannot perform URL verification according to the user terminal information. The method may prevent other users from accessing the resource through the same URL and realizes the control of resource access. Further, the SP may not need to deploy the URL verification function for every service server, which reduces the cost of service deployment and increases the benefits.

In the embodiment corresponding to FIG. 2 of the present invention, the URL link verification function is migrated to a gateway device, and the gateway device verifies URL links according to the user terminal information. The embodiment of the present invention further provides another verification method for resource access control, where a service server obtains information of a user terminal that makes access so as to enable the service server to verify the URL link.

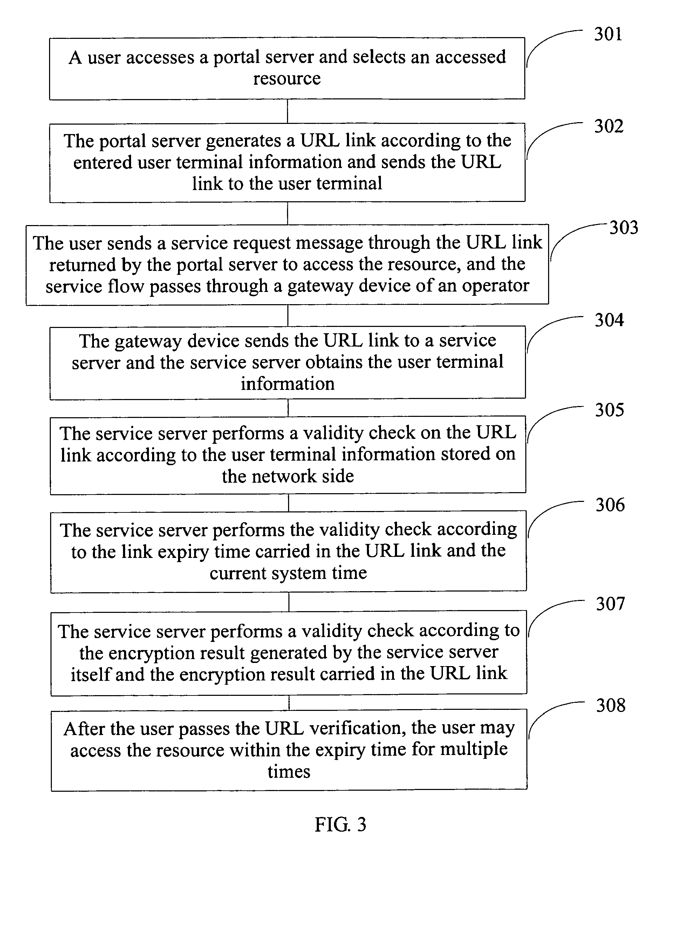

As shown in FIG. 3, an embodiment of the present invention provides still another verification method for resource access control. The method includes the following steps.

Step 301: A user accesses a portal server and selects an accessed resource.

The user may browse an accessible resource list and the charging information on the portal server to select a resource needed to be accessed. Then, the user clicks a paid link and enters information (user number such as MSISDN) of the user terminal that needs to access the resource or account/password of the user to obtain a valid URL link to the accessible resource.

It should be noted that, in specific application scenarios, after the user selects the accessed resource, the entering the user terminal information is optional. For example, the user account and the user terminal information (such as mobile phone number) are bound, and the user terminal information can be determined according to the account.

Step 302: The portal server generates a URL link according to the user terminal information and sends the URL link to the user terminal.

For example, in specific application scenarios, the portal server may apply the MD5 algorithm to a string based on the entered user terminal information (MSISDN, IMSI or information that can uniquely identify the user terminal), a URL of the accessed resource, a link expiry time, and a shared secret key in the format <URL>+<Expriy Time>+<MSISDN>+<Secret Key> (where the shared secret key is the same secret key configured on the GGSN and the portal server) to generate a hash value and finally constitute a URL link in the format <URL>+<Expriy Time>+<MSISDN>+<HASH value>, and then send the generated URL link to the user.

An example of a valid URL format is as follows:
rtsp://10.10.10.10/Music/3gp/GL_CEW_V3GQ.3gp?090820180000+86139012345 67+2d95de254653ecd7ee653769a3c041cf
where rtsp://10.10.10.10/Music/3gp/GL_CEW_V3GQ.3gp? is the URL of the original accessed resource; 090820180000 is the expiry time, indicating that the URL is valid until 2009-08-20 18:00; 8613901234567 is a mobile phone number, indicating the MSISDN that accesses the resource is 8613901234567; 2d95de254653ecd7ee653769a3c041cf is the hash value obtained by applying the MD5 algorithm to "rtsp://10.10.10.10/Music/3gp/GL_CEW_V3GQ.3gp?090820180000+8613901234567+ mobileone", where mobileone is the secret key.

It should be noted that an exemplary URL link generating method is described in this step but those skilled in the art may understand that the ULR link generating method in this step is not limited to such method. For example, after the user terminal pays for the access resource provided by the SP, the user terminal may not be restricted by the access time and may access the paid resource at any time. That is, the link expiry time used when the URL link is generated is optional. In this embodiment, the URL link is generated by applying the MD5 algorithm to a string, but those skilled in the art may understand that other substitute calculating methods may be used for generating the URL link without affecting the specific implementation of the embodiment of the present invention. The format of the URL link generated in this step is defined in accordance with the MD5 calculation, but the format of the URL link is not limited in the embodiment of the present invention.

Step 303: The user accesses the resource through the URL link returned by the portal server; a gateway device of an operator receives a service request message which includes the URL link.

Step 304: The gateway device sends the URL link to a service server and the service server obtains the user terminal information stored on the network side.

In specific application scenarios, the gateway device may use the method for obtaining the user terminal information stored on the network side in step 205 to obtain the user terminal information corresponding to the URL link stored on the network side. Further, the gateway device may send the URL link to the service server through the service request message for resource access of the user. The header of the service request message may be enhanced by inserting the user terminal information stored on the network side in the message so as to notify the user terminal information to the service server.

It should be noted that in the embodiment of the present invention, other methods may also be applied to notify the user terminal information to the service server. For example, in the network deployment of the operator, the operator and the SP may define an interface and function to transfer the user information. The method for the service server to obtain the user terminal information may also be as follows.

In a specific implementation scenario, a query interface is defined between the service server and a user subscription information storing network element (such as an HSS: Home Subscriber Server, home subscriber server) or a gateway device of the operator. The gateway device may send the IP address of the user terminal to the service server in the service request message for resource access of the user. After receiving the request message of the user, the service server may query the network element of the operator using the source IP address for the related user information, and then perform a validity check according to the user information carried in the URL.

A signaling interface is defined between the service server and a user subscription information buffering network element (such as an HSS: Home Subscriber Server, home subscriber server) or the gateway device of the operator. An additional activation notification message is sent from the gateway device of the operator to the service server in user activation and deactivation procedures to notify the service server of the mapping relation between the IP address allocated for the user terminal and the user terminal information. Then the service server queries the user information according to the IP address of the user terminal carried in the service request message and performs a validity check according to the user information carried in the URL link.

Step 305: The service server performs a validity check on the URL link according to the user terminal information stored on the network side.

Specifically, when the user terminal information stored on the network side is carried to the service server in the enhanced message header, the service server may parse the message to obtain the user terminal information corresponding to the URL link.

The service server parses the URL link to obtain the user terminal information included in the URL link and performs the validity check according to the user terminal information stored on the network side and the user terminal information included in the URL link. That is, the service server extracts the user terminal information included in the URL link from the URL link and judges whether the user terminal information which is stored on the network side and obtained from the network side is consistent with the user terminal information included in the URL link. If the user terminal information which is stored on the network side and obtained from the network side is not consistent with the user terminal information included in the URL link, the service server blocks the service flow; if the user terminal information which is stored on the network side and obtained from the network side is consistent with the user terminal information included in the URL link, the procedure proceeds to subsequent verifications.

It should be noted that, in specific application scenarios, before the performing the validity check on the URL link according to the user terminal information, the method further includes verifying the URL format.

The service server performs DPI parsing on the received service request message sent by the gateway device to obtain the URL link and parses the URL link that requires validity check according to the format defined in step 202 to obtain the user terminal information, expiry time, and encryption result that are carried in the URL link. After performing DPI parsing on the received message, the service server judges whether the format of the obtained URL link is the same as the format negotiated with the portal server. If the format of the obtained URL link is the same as the format negotiated with the portal server, the procedure proceeds to the subsequent validity check; if the format of the obtained URL link is different from the format negotiated with the portal server, the validity check fails and the service flow is blocked.

The method for the service server to parse the URL in this step can be seen in step 205 in the previous embodiment, and is not repeatedly described here.

Step 306: The service server performs the validity check according to the link expiry time carried in the URL link and the current system time. That is, the service server compares the link expiry time carried in the URL link with the current system time. If the system time exceeds the link expiry time, the service flow is blocked; if the system time does not exceed the link expiry time, the procedure proceeds to subsequent verifications.

Step 307: The service server applies the MD5 algorithm according to a shared secret key in the format <URL>+<Expriy Time>+<MSISDN>+<Secret Key> by using the same method as that in step 302 to calculate a hash value and judges whether the hash value generated by the service server itself is consistent with the hash value carried in the URL link. If the hash value generated by the service server itself is consistent with the hash value carried in the URL link, the validity check succeeds; if the hash value generated by the service server itself is not consistent with the hash value carried in the URL link, the validity check fails and the service flow is blocked.

It should be noted that this step corresponds to step 302. The service server may encrypt the data using other encryption algorithms similar to the algorithm used in step 302 and perform the validity check according to the encryption result generated by the service server and the encryption result carried in the URL link. The format <URL>+<Expriy Time>+<MSISDN>+<Secret Key> and MD5 are just one example of the specific embodiments. The embodiment of the present invention does not limit the format and the encryption algorithm.

It should be noted that <Expriy Time> is an optional parameter. That is, when the portal server calculates an encryption result and when the gateway device calculates an encryption result using the same algorithm, the parameter <Expriy Time> may not be included in the calculation format.

Step 308: After the user passes the URL verification, the user may access the resource within the expiry time for multiple times.

It should be noted that the link expiry time verification in step 306 and the encryption verification in step 307 are both optional steps. Both steps, or either step, or neither step may be executed. Step 306 and step 307 may precede or follow step 305. The embodiment of the present invention does not limit the sequence of the verifications.

In the verification method for resource access control according to the embodiment of the present invention, the service server of the SP obtains information of the user terminal that accesses a resource of the service server from the communication network side and performs the validity check on the URL link according to the user terminal information. This method overcomes the defect in the prior art that the service server on the Internet side cannot verify URL links according to user terminal information. The method may prevent other users from accessing the resource through the same URL and realizes the control of resource access.

It should be noted that, in the embodiment of the present invention, the gateway device and the portal server that is provided by the SP may be deployed flexibly in a unified or distributed manner. The operator may provide unified portal servers to form a complete operator network solution with the GGSN. Or, the SP and the operator may cooperate to deploy the portal server, where the SP provides an independent portal server and the same secret key is configured on the portal server and the gateway device to implement the solution. The operator network is not limited to GSM/GPRS/WCDMA/TD-SCDMA mobile networks. All other networks that are able to provide Internet access services are within the protection scope of the present invention.

In accordance with the verification method for resource access control in the foregoing embodiments, embodiments of the present invention further provide a verification apparatus and system for resource access control.

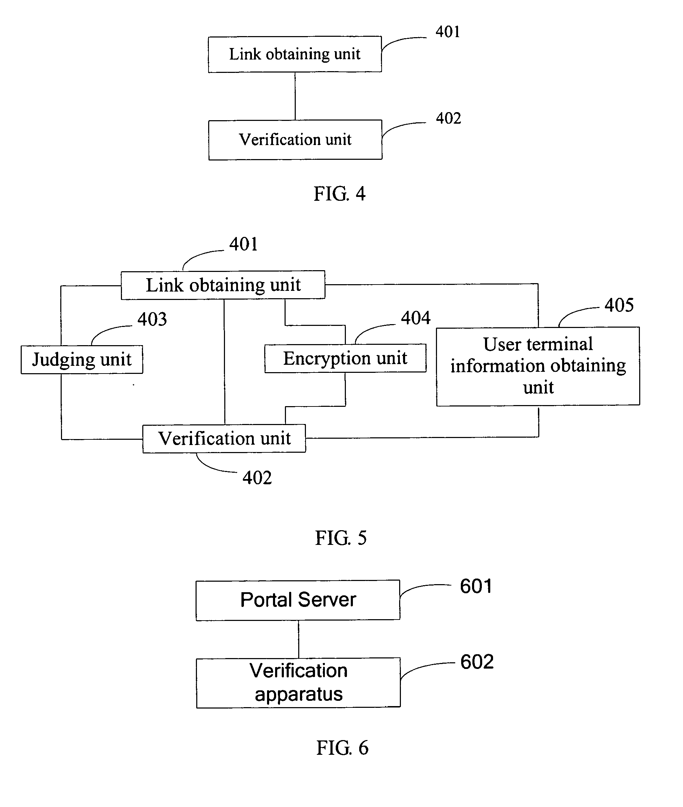

As shown in FIG. 4, an embodiment of the present invention provides a verification apparatus for resource access control. The apparatus includes:
a link obtaining unit 401, configured to obtain a Uniform Resource Locator (URL) link sent by a user terminal, where the URL link is generated by a portal server according to obtained user terminal information; and
a verification unit 402, configured to obtain the user terminal information included in the URL link and perform a validity check according to the user terminal information stored on the network side and the user terminal information included in the URL link.

Further, to describe the foregoing apparatus in more details, as shown in FIG. 5, an embodiment of the present invention provides another verification apparatus for resource access control. Besides the link obtaining unit 401 and the verification unit 402, the apparatus further includes a judging unit 403, an encryption unit 404, and a user terminal information obtaining unit 405.

The judging unit 403 is configured to judge whether it is necessary to verify the URL link according to at least one of the following: an IP address of the service server corresponding to the URL link, a port number of the service server, and a domain name of the URL link.

The verification unit 402 is specifically configured to judge whether the user terminal information stored on the network side is consistent with the user terminal information included in the URL link, and if the user terminal information stored on the network side is consistent with the user terminal information included in the URL link, the validity check succeeds; if the user terminal information stored on the network side is not consistent with the user terminal information included in the URL link, the validity check fails.

The verification unit 402 is further configured to judge whether the format of the URL link obtained by parsing the service request message is the same as the format negotiated with the portal server, and if the format of the URL link obtained by parsing the service request message is the same as the format negotiated with the portal server, the procedure proceeds to subsequent validity check; if the format of the URL link obtained by parsing the service request message is different from the format negotiated with the portal server, the validity check fails.

Before or after the verification unit 402 performs the validity check on the user terminal information, the verification unit 402 may be further configured to compare whether the current system time exceeds the link expiry time carried in the URL link, and if the current time does not exceed the link expiry time carried in the URL link, the time verification succeeds; if the current time exceeds the link expiry time carried in the URL link, the time verification fails.

The apparatus further includes the encryption unit 404, configured to use the same encryption method as that used by the portal server to encrypt the user terminal information, resource URL, and shared secret key that are obtained from the URL link and obtain an encryption result; or use the same encryption method as that used by the portal server to encrypt the user terminal information, resource URL, link expiry time, and shared secret key that are obtained from the URL link and obtain an encryption result.

Before or after the verification unit 402 performs the validity check on the user terminal information, the verification unit 402 may be further configured to check whether the encryption result generated by the encryption unit 404 is consistent with the encryption result carried in the URL link. If the encryption result generated by the encryption unit 404 is consistent with the encryption result carried in the URL link, the encryption result verification succeeds; if the encryption result generated by the encryption unit 404 is not consistent with the encryption result carried in the URL link, the encryption result verification fails.

The apparatus further includes the user terminal information obtaining unit 405, configured to obtain the user terminal information stored on the network side.

The user terminal information obtaining unit 405 is specifically configured to obtain the user terminal information stored on the network side from the service request message sent by a gateway device.

Or, the user terminal information obtaining unit 405 is specifically configured to obtain the user terminal information stored on the network side from a user subscription information storing network element or a gateway device on the network side according to the IP address of the user terminal.

As shown in FIG. 6, an embodiment of the present invention provides a verification system for resource access control. The system includes:
a portal server 601, configured to generate a URL link according to obtained user terminal information and send the URL link to a verification apparatus; and
the verification apparatus 602, configured to obtain the user terminal information included in the URL link and perform a validity check according to the user terminal information stored on the network side and the user terminal information included in the URL link.

In the verification method, apparatus, and system for resource access control according to the embodiments of the present invention, the URL link generated by the portal server and sent by the user terminal is obtained and the validity check is performed on the URL link according to the user terminal information stored on the network side so that the validity check can be performed on the URL link according to the user terminal information, which prevents different users from accessing the resource through the same correct URL link and avoids occurrence of link theft.

Those of ordinary skill in the art may understand that all or part of the steps in the method according to the foregoing embodiments of the present invention may be implemented by a program instructing relevant hardware. The program may be stored in a computer readable storage medium. The storage medium may be a ROM/RAM, a magnetic disc, or an optical disc.

Although the present invention is described through some exemplary embodiments, the present invention is not limited to such embodiments. It is apparent that those of ordinary skill in the art may still make various modifications and variations to the present invention without departing from the spirit and scope of the present invention. The present invention is intended to cover the modifications and variations provided that they fall within the protection scope defined by the claims or their equivalents.

## Claims

1. A verification method for resource access control, comprising:
obtaining a Uniform Resource Locator (URL) link sent by a user terminal, wherein the URL link is generated by a portal server according to obtained user terminal information; and
obtaining the user terminal information comprised in the URL link and performing a validity check according to user terminal information stored on a network side and the user terminal information comprised in the URL link.

2. The method according to claim 1, specifically comprising:
obtaining, by a gateway device, the URL link sent by the user terminal, wherein the URL link is generated by the portal server according to the obtained user terminal information; and obtaining, by a gateway device, the user terminal information comprised in the URL link and performing, by a gateway device, a validity check according to the user terminal information stored on the network side and the user terminal information comprised in the URL link; or
obtaining, by a service server, the URL link sent by the user terminal, wherein the URL link is generated by the portal server according to the obtained user terminal information; and obtaining, by the service server, the user terminal information comprised in the URL link and performing, by the service server, a validity check according to the user terminal information stored on the network side and the user terminal information comprised in the URL link.

3. The method according to claim 2, wherein before the performing, by the gateway device, the validity check according to the user terminal information stored on the network side and the user terminal information comprised in the URL link, the method further comprises:
judging, by the gateway device, whether it is necessary to verify the URL link according to at least one of the following: an IP address of a service server corresponding to the URL link, a port number of the service server, and a domain name of the URL link.

4. The method according to claim 1 or 2, wherein before the performing the validity check according to the user terminal information stored on the network side and the user terminal information comprised in the URL link, the method comprises:
judging whether a format of the URL link is the same as a negotiated format, wherein if the format of the URL link is the same as the negotiated format, the procedure proceeds to the subsequent validity check; if the format of the URL link is different from the negotiated format, the validity check fails.

5. The method according to claim 1 or 2, wherein the performing the validity check according to the user terminal information stored on the network side and the user terminal information comprised in the URL link comprises:
judging whether the user terminal information stored on the network side is consistent with the user terminal information comprised in the URL link, wherein if the user terminal information stored on the network side is consistent with the user terminal information comprised in the URL link, the validity check succeeds; if the user terminal information stored on the network side is not consistent with the user terminal information comprised in the URL link, the validity check fails.

6. The method according to claim 1 or 2, wherein:
the generating, by the portal server, the URL link according to the obtained user terminal information comprises:
performing, by the portal server, encryption according to the obtained user terminal information, a resource URL, and a shared secret key to obtain an encryption result; and constructing, by the portal server, the URL link according to the obtained user terminal information, the resource URL, the shared secret key, and the encryption result; and
before or after the performing the validity check according to the user terminal information stored on the network side and the user terminal information comprised in the URL link, the method further comprises:
using the same encryption method as that used by the portal server to encrypt the user terminal information, the resource URL, and the shared secret key that are obtained from the URL link to obtain an encryption result; and judging whether the generated encryption result is consistent with the encryption result carried in the URL link, wherein if the generated encryption result is consistent with the encryption result carried in the URL link, the encryption result verification succeeds; if the generated encryption result is not consistent with the encryption result carried in the URL link, the encryption result verification fails.

7. The method according to claim 1 or 2, wherein:
the generating, by the portal server, the URL link according to the obtained user terminal information comprises:
performing, by the portal server, encryption according to the obtained user terminal information, a resource URL, a link expiry time, and a shared secret key to obtain an encryption result; and constructing, by the portal server the URL link according to the obtained user terminal information, the resource URL, the link expiry time, the shared secret key, and the encryption result; and
before or after the performing the validity check according to the user terminal information stored on the network side and the user terminal information comprised in the URL link, the method further comprises:
using the same encryption method as that used by the portal server to encrypt the user terminal information, the resource URL, the link expiry time, and the shared secret key obtained from the URL link to obtain an encryption result; and judging whether the generated encryption result is consistent with the encryption result carried in the URL link, wherein if the generated encryption result is consistent with the encryption result carried in the URL link, the encryption result verification succeeds; if the generated encryption result is not consistent with the encryption result carried in the URL link, the encryption result verification fails.

8. The method according to claim 1 or 2, wherein the URL link comprises a link expiry time, and before or after the performing the validity check according to the user terminal information stored on the network side and the user terminal information comprised in the URL link, the method further comprises:
comparing whether a current system time exceeds the link expiry time carried in the URL link, wherein if the current system time does not exceed the link expiry time carried in the URL link, the time verification succeeds; if the current system time exceeds the link expiry time carried in the URL link, the time verification fails.

9. The method according to claim 2, further comprising:
obtaining, by the service server, the user terminal information stored on the network side.

10. The method according to claim 9, wherein the obtaining, by the service server, the user terminal information stored on the network side comprises:
receiving, by the service server, a service request message sent by the gateway device, wherein the service request message carries the user terminal information stored on the network side; or
obtaining, by the service server, the user terminal information stored on the network side from a user subscription information storing network element or the gateway device on the network side according to an IP address of the user terminal.

11. A verification apparatus for resource access control, comprising:
a link obtaining unit, configured to obtain a Uniform Resource Locator (URL) link sent by a user terminal, wherein the URL link is generated by a portal server according to obtained user terminal information; and
a verification unit, configured to obtain the user terminal information comprised in the URL link and perform a validity check according to user terminal information stored on a network side and the user terminal information comprised in the URL link.

12. The apparatus according to claim 11, further comprising:
a judging unit, configured to judge whether it is necessary to verify the URL link according to at least one of the following: an IP address of a service server corresponding to the URL link, a port number of the service server, and a domain name of the URL link.

13. The apparatus according to claim 11, wherein:
the verification unit is specifically configured to: judge whether the user terminal information stored on the network side is consistent with the user terminal information comprised in the URL link, wherein if the user terminal information stored on the network side is consistent with the user terminal information comprised in the URL link, the validity check succeeds; if the user terminal information stored on the network side is not consistent with the user terminal information comprised in the URL link, the validity check fails.

14. The apparatus according to claim 11, wherein:
the verification unit is further configured to: judge whether a format of the URL link obtained by parsing a service request message is the same as an negotiated format, wherein if the format of the URL link obtained by parsing a service request message is the same as the negotiated format, the procedure proceeds to the subsequent validity check; if the format of the URL link obtained by parsing a service request message is different from the negotiated format, the validity check fails.

15. The apparatus according to claim 11, wherein:
the verification unit is further configured to: compare whether a current system time exceeds a link expiry time carried in the URL link, wherein if the current system time does not exceed the link expiry time carried in the URL link, the time verification succeeds; if the current system time exceeds the link expiry time carried in the URL link, the time verification fails.

16. The apparatus according to claim 11, further comprising:
an encryption unit, configured to use the same encryption method as that used by the portal server to encrypt the user terminal information, a resource URL, and a shared secret key obtained from the URL link and obtain an encryption result; or use the same encryption method as that used by the portal server to encrypt the user terminal information, a resource URL, a link expiry time, and a shared secret key obtained from the URL link and obtain an encryption result, wherein
the verification unit is further configured to check whether the encryption result generated by the encryption unit is consistent with the encryption result carried in the URL link, wherein if the encryption result generated by the encryption unit is consistent with the encryption result carried in the URL link, the encryption result verification succeeds; if the encryption result generated by the encryption unit is not consistent with the encryption result carried in the URL link, the encryption result verification fails.

17. The apparatus according to claim 11, further comprising:
a user terminal information obtaining unit, configured to obtain the user terminal information stored on the network side.

18. The apparatus according to claim 17, wherein:
the user terminal information obtaining unit is specifically configured to obtain the user terminal information stored on the network side from a service request message sent by a gateway device; or
the user terminal information obtaining unit is specifically configured to obtain the user terminal information stored on the network side from a user subscription information storing network element or a gateway device on the network side according to an IP address of the user terminal.

19. A verification system for resource access control, comprising:
a portal server, configured to generate a Uniform Resource Locator (URL) link according to obtained user terminal information and send the URL link to a verification apparatus; and
the verification apparatus, configured to obtain the user terminal information comprised in the URL link and perform a validity check according to user terminal information stored on a network side and the user terminal information comprised in the URL link.
